# EUROPEAN PATENT SPECIFICATION

(11) **EP 2 489 137 B1**
(45) Date of publication and mention of the grant of the patent: **14.08.2013**
(21) Application number: 10763369.5
(22) Date of filing: 08.10.2010
(51) Int. Cl.: H04B 7/185

(54) **A terminal for communicating with a satellite and a device of a short range network**
Endgerät zur Kommunikation mit einem Satelliten und einem Gerät eines Netzes kurzer Reichweite
Terminal pour communiquer avec un satellite et un appareil d'un réseau de courte portée

(30) Priority: 16.10.2009 EP 09275101; 16.10.2009 GB 0918153; 01.04.2010 EP 10275032
(43) Date of publication of application: 22.08.2012
(73) Proprietor: Astrium Limited, Stevenage Hertfordshire SG1 2AS (GB)
(72) Inventor: LESTER, Donald, Hertfordshire SG1 2AS (GB); MACMANUS, Niall, Andrew, HertfordshireSG1 2AS (GB)
(74) Representative: Hewett, Jonathan Michael Richard
(86) International application number: PCT/EP2010/065141
(87) International publication number: WO 2011/045251

(56) References cited:
- EP-A- 0 927 933
- WO-A-97/33397
- WO-A-03/085860
- WO-A1-96/26597
- US-A- 5 845 230
- US-A1- 2001 031 620
- US-A1- 2003 043 761
- US-A1- 2003 098 782

## Description

### Field of the Invention

The invention relates to a terminal for communicating with a communication satellite. More particularly, but not exclusively, it relates to a network comprising a communication satellite and a large number of terminals for communicating with the communication satellite.

### Background of the invention

All industrialised countries will have to reduce their CO₂ emissions in the coming years. There are many options to replace fossil-fuelled electricity generation with renewable technologies but such sources can be intermittent. Many renewable technologies depend on the prevailing weather patterns. If a large proportion of the energy supply comes from these sources, active load management may be important to avoid instabilities in the distribution network.

It is also desired to find an alternative to the manual collection of readings from utility meters in households. One proposed solution is the installation in households of "smart meters" that can be read remotely.

The "smart meters" could also be used to automatically manage micro generation of renewable energy and to permit remote switching of non-critical loads such as water heaters or vehicle battery chargers.

To carry out meter readings and consumer active load management, the "smart meters" would have to be equipped with a communications return link. Various solutions have been proposed to implement such return links. For example, it would be possible to use the power cabling itself to carry the communication signals. One disadvantage associated with this solution is the inability to command distributed loads and generators into a particular state to enable safe recovery from a system fault that may involve damaged or missing cables.

The invention aims to improve on the prior art.

See WO-A-96/26597 (Scientific-Atlanta).

### Summary of the Invention

According to the invention, there is provided a terminal comprising: a first transceiver for communicating with at least one device in a short range network; a second transceiver for communicating with a geostationary communication satellite in a network deploying a plurality of forward channels for the communication satellite to transmit data to said terminal and a plurality of return channels for the terminal to transmit data to said communication satellite, the second transceiver being configured to transmit data from said at least one device in one of said plurality of return channels.

The second transceiver may be configured to be continuously logically connected to said geostationary communication satellite. The plurality of forward channels and the plurality of return channels may deploy asymmetric data rates.

The forward channels and the return channels may comprise a plurality of frames divided into a plurality of time slots in a predetermined frame structure and the terminal may further comprising storage means for storing one or more addresses of said terminal, the one or more addresses comprising a group address indicating a group of terminals to which the terminal belongs and terminal specific address within the group; and control means for controlling the second transceiver to receive, at a predetermined time, a group message in a forward channel of said plurality of forward channels from said communication satellite, the group message being transmitted according to the predetermined frame structure and indicating a group address, the control means further being configured to determine whether the group address matches a stored address for the terminal and in response to a positive determination to control the second transceiver to listen for a terminal specific message to said terminal in the frame in which said message was transmitted.

The group message may indicate the time to the next group message from said communication satellite in said forward channel and the control means may be configured to control the second transceiver to receive the next group message. The control means may be configured to switch the second transceiver into sleep-mode in response to determining that the group address does not match a stored address for the terminal.

The transceiver may be configured to receive said terminal specific message and the terminal specific message may comprise the address of the terminal and data indicating instructions to perform an action. The data indicating instructions may be a code and the memory comprises a look-up table storing the code and the instructions corresponding to the code. The instructions to perform an action may comprise instructions to transmit data from one of said devices, to turn on one of said devices, to switch off one of said devices or to switch to another forward channel of said plurality of forward channels.

The control means may be configured to control the second transceiver to send a response to said terminal specific message in a return channel of the plurality of return channel, said return channel corresponding to said forward channel. The control means may be configured to control the second transceiver to send said response at a predetermined interval after the start of said terminal specific message, the predetermined interval corresponding to the duration of the frame in the forward channel in which the terminal specific message was received. The duration of the response may be equal to the duration of the corresponding modem specific message.

The terminal specific message may indicate a new group address for said terminal and the memory may be configured to store the new group address.

The control means may be configured to control the transceiver to transmit a random access message in a return channel of the plurality of return channels in response to the group message indicating that the return channel is a random access channel. Alternatively, or additionally, the group message may be transmitted over a number of time slots and the control means may be configured to control the transceiver to transmit a random access message in one or more time slots in a return channel corresponding to one or more of the number of time slots of a group message in a corresponding forward channel.

Said at least one device may be a utility meter and the terminal may be operable to transmit a meter reading in said return channel.

According to the invention, there is also provided a network comprising a terminal according to any one of the preceding claims and at least one device for communicating with said terminal in said short-range network. The network may be an ad-hoc short-range wireless network. The at least one device may include a utility meter.

The second transceiver may comprise an antenna with a gain of between 0 dBi and 12 dBi for communicating with the communication satellite.

According to the invention, there is also provided a system comprising a geostationary communication satellite; a plurality of user networks described above for communication with the communication satellite in a wide area network; and a network controller for controlling the wide area network. The network controller may be configured to group the terminals of said plurality of user networks into a plurality of groups. The network controller may be provided by a data authority on the ground. The system may be configured to collect utility meter readings across a geographical region. The system may also be used to provide consumer active load management.

According to the invention, there is also provided a method of communicating with a geostationary communication satellite in a wide area network deploying a plurality of forward channels and a plurality of return channels, the forward and return channels comprising a plurality of frames divided into time slots, the method comprising: receiving a group message at a predetermined time in a forward channel, the group message indicating a group address; comparing the group address to a stored group address; and if the group message matches the stored address, listening for terminal specific messages in the frame in which said group message was received.

The method may further comprise receiving a terminal specific message, the terminal specific message indicating a terminal specific address and data indicating instructions; comparing the terminal specific address to a stored terminal specific address; and if the terminal specific address matches the stored terminal specific address, performing the instructions. The method may further comprise noting the time slot in which the terminal specific address was transmitting and transmitting a response to said terminal in a time slot at a predetermined interval later in a return channel corresponding to said forward channel, the predetermined interval corresponding to the duration of the frame in which the terminal specific message was received.

According to the invention there is also provided a computer program comprising instructions that when executed by a processor causes the processor to perform the above method.

Yet further, according to the invention, there is also provided a system for communicating with a plurality of terminals via a geostationary communication satellite, the plurality of terminals and the communication satellite communicating in a wide area network deploying a plurality of forward channels and a plurality of return channels comprising a plurality of frames divided into time slots, the system comprising: means for transmitting a group message and a subsequent terminal specific message via the geostationary communcation satellite to a terminal in one of said forward channels, said group message indicating a group address of a plurality of terminals and said subsequent terminal specific message indicating a terminal specific address of a terminal belonging to said plurality of terminals.

The system may further comprises means for receiving a response via a return channel and said geostationary communication satellite; means for determining the time slot in which the response was transmitted and, if the interval between time slot in which the terminal specific message was transmitted and the time slot in which the response was transmitted corresponds to the duration of the frame in which the terminal specific message was transmitted, determining that the response was transmitted from said terminal belonging to said plurality of terminals.

Moreover, according to the invention, there is provided a terminal for communicating with the geostationary communication satellite in a wide area network, the wide area network deploying a plurality of forward channels on which the modem can receive data from the communication satellite and a plurality of return channels on which the modem can transmit data to the communication satellite, the average data rate in each forward channels being lower than 1kbits/s and the average data rate in each return channels being lower than 4 kbits/s.

There is also provided a system comprising a geostationary communication satellite and a plurality of terminals as above, wherein the plurality of terminals are configured to communicate with said communication satellite in a single radio cell of the wide area network and to remain logically connected to the communication satellite within the cell. Each terminal may be connected to at least one utility meter. The plurality of terminals may comprise more than 30 million terminals. It may also comprise more than 50 million terminals.

### Brief Description of the Drawings

Figure 1 shows a communication system for a geographical region;
Figure 2 shows the communication between a communication satellite and a user network in the communication system;
Figure 3 schematically illustrates the components of a modem in the user network;
Figure 4 schematically illustrates the components of a device in the user network;
Figure 5 schematically illustrates the components of a control station;
Figure 6 schematically illustrates the components of the communication satellite;
Figure 7 illustrates how the modem and the communication satellite communicate in a basic mode of operation, according to some embodiments of the invention;
Figure 8 shows the structure of various messages between the modem and the communication satellite, according to some embodiments of the invention;
Figure 9 shows the timing of frames, messages and responses between the modem and the communication satellite, according to some embodiments of the invention;
Figure 10 illustrates another mode of operation between the modem and the communication satellite;
Figure 11 illustrates how the modem can send emergency messages to the communication satellite;
Figure 12 illustrates another way for the modem to send emergency messages to the communication satellite;
Figure 13 illustrates how modems establish communication with the communication satellite.

### Detailed Description

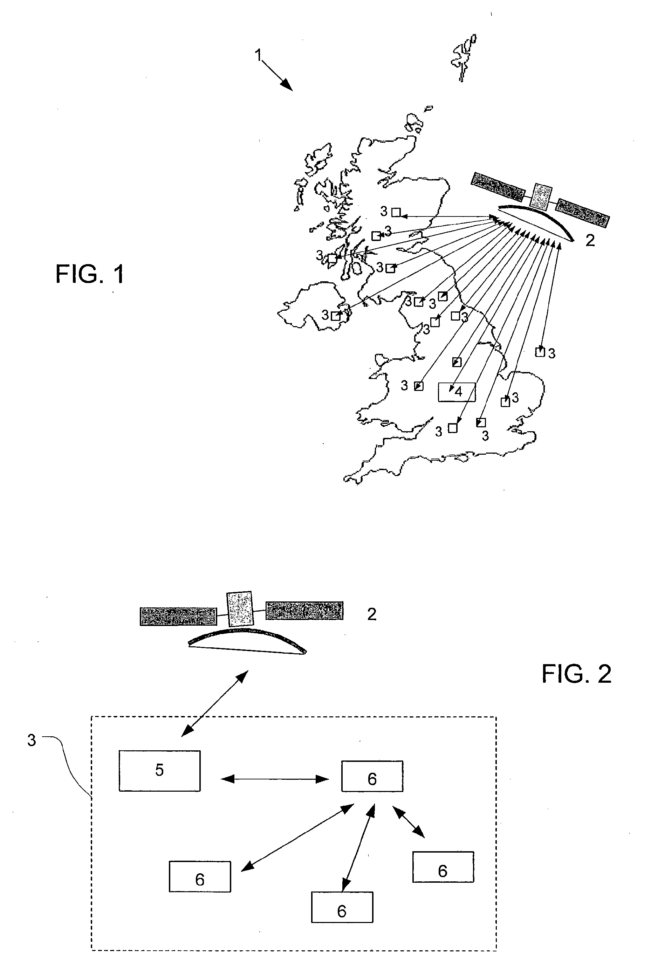

With reference to Figure 1, a communication system 1 comprises a communication satellite 2 in communication with a number of user networks 3 and a control station 4. For example, the communication system may cover a country or a region of the world. There may be one user network for at least every household or group of households in the country or region of the world. The communication satellite 2 moves in a geosynchronous orbit. It may be located over the equator and therefore also be a geostationary satellite. The satellite therefore provides continuous coverage to the country or the region of the world where the user networks 3 are located. Only a small number of user networks have been shown in Figure 1 but it is contemplated that more than 50 million user networks may be used in the system. Moreover, more than one control station can be used.

With reference to Figure 2, each user network 3 comprises a modem 5 for communicating with the geostationary communication satellite 2 in a wide area network (WAN). The user network also comprises a number of devices 6 connected to the modem in a local area network (LAN). The LAN may be a wireless ad-hoc network, including, but not limited to, a Bluetooth network or a ZigBee network. It may also be a wired network. In one embodiment, one of the devices 6 may act as the user network controller that controls the communication in the LAN.

In some embodiments, the communication system 1 may provide a utility control system for all households in a particular region or country. The devices 6 may be a number of sensors and smart meters for monitoring utilities in one or more households and the control station 4 may be a single secure data authority that may be linked to one or more grid authorities. The communication system 1 can be used to read gas, electricity and water meters remotely but it can also be used to provide active load management. For example, the system can be used to remotely switch non time-critical loads to enable automatic management of micro generation. It is contemplated that in some embodiments, the user network controller would be the electric meter since this has permanently available mains power. Hereinafter, the user network will be described to include a modem and a plurality of utility meters and the control station will be described as a data authority. However, it should be understood that this is just one example and many other uses are possible. Moreover, it should be understood that the devices may include, in addition to the smart meters, other sensor devices and also devices that provide other functions. For example, the devices may include burglar alarms and other sensors for monitoring the condition of frail people in their homes or the condition of perishable materials. Additionally, the modems and the devices are not limited to be installed in households. They may be installed in, for example, warehouses, ships and museums and may monitor high value items or conditions such as the temperature of power line conductors or local wind speed.

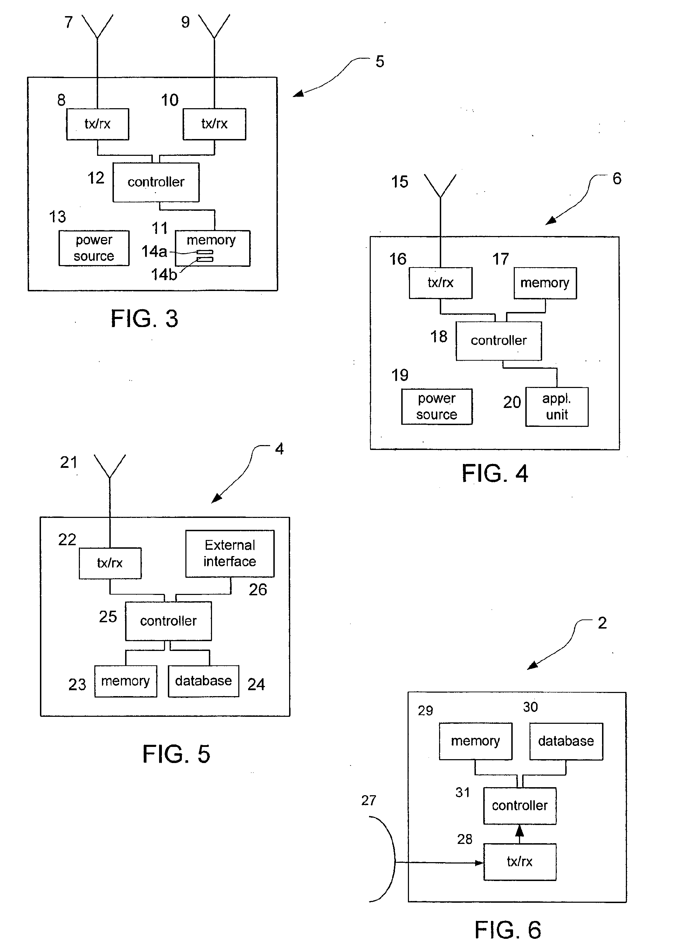

With reference to Figure 3, the modem 5 comprises a short range communication antenna 7, a short-range communication transceiver 8 for communicating with the LAN via the short range communication antenna 7, a satellite communication antenna 9 and a satellite communication transceiver 10 for communicating with the communication satellite 2 via the satellite communication antenna 9. The modem further comprises a memory 11 for storing data and computer-executable instructions. The modem 5 also comprises a controller 12 for controlling the short-range communication transceiver 8 and the satellite communication transceiver 10. Additionally, the modem 5 comprises a power source 13. The power source may be a solar cell, a battery or a combination of a solar panel and a battery. It could also be a connection to a source of mains power.

The satellite communication antenna 9 and satellite communication transceiver 10 may operate in the UHF, L or S bands. At these frequencies the satellite communication antenna 9 may be a simple dipole or patch with a wide beamwidth, which greatly simplifies modem installation. A high gain antenna is not required. The antenna may be a non-direction antenna or have a low gain. Other frequencies may be used, such as X, C or Ku band, provided that the satellite communication antenna 9 can have a relatively low gain, 0 to 12dBi. In some embodiments, the satellite communication antenna 9 and the satellite communication transceiver 10 communicate using signals with a frequency higher than 1 GHz. In some embodiments, to preserve simplicity of installation, the gain in azimuth does not exceed 6dBi but the gain in elevation can be up to 12dBi because a simple spirit level can be used to set the antenna substantially vertical, which in this case may mean within 30 degrees.

The memory 11 stores the address 14a, 14b of the modem 5. The modem belongs to one or more groups. It may also belong to one or more sub-groups within that group. Additionally, it has an address within the group or sub-group. A group may be all modems located in a particular part of the country and a sub-group may be all modems related to a particular utility supplier. However, modems located in particular parts of the country and related to a particular utility supplier may also be split over many different groups. The modems may be grouped in dependence on the network requirements. The address of the modem may be determined as a group address 14a and the specific address of the modem 14b in the group. Alternatively, if the group is divided into sub-groups, the address may be determined as the group address, the sub-group address and the address of the modem in the sub-group. One modem can have more than one address such that it can be addressed through different groups. The memory 11 may also store data corresponding to a plurality of modes of operation of the modem. The modes define how the modem communicates with the satellite. The memory 11 may also store a number of codes and corresponding actions to be performed in the user network 3. Instead of receiving a set of instructions from the communication satellite, the modem may receive a code and the modem may look up the instruction corresponding to this code in memory 11. The codes may be stored in a look-up table in the memory 11. The addresses 14a, 14b, the modes and the actions will be described in more detail below.

With reference to Figure 4, a device 6 in the user network may comprise a short-range communication antenna 15 and a transceiver 16 for communicating with the modem 5 via the short-range communication antenna 15. The device 6 may also comprise a memory 17 for storing data and computer-readable instructions. Additionally, the device may comprise a controller 18 and an application unit 19. The application unit 19 may be a metering application. For example, if the device is a water meter, the application unit 19 may record the amount of water used by the household or the block of flats in which it is installed. It should be realised that a water meter is just one example and the application may additionally or alternatively perform other tasks. The device 6 may also comprise a power source 19. In some embodiments, the power source is an interface to the main electricity supply of the household. In other embodiments, the power source is a solar panel or a battery or a combination of both. The device 6 receives request for information from the modem via the short-range communication antenna 15 and the transceiver and replies with the requested information. It may also initiate communication with the modem by transmitting a message to the modem 5. Since communication within a short-range network is known it will not be described in detail herein. It is contemplated that any suitable messaging protocol between the modem 5 and device can be used.

With reference to Figure 5, the control station or data authority 4 may comprise a satellite communication antenna 21 and a satellite communication transceiver 22. The data authority 4 may also comprise a memory 23 for storing data and computer-readable instructions. Additionally, it may comprise a database 24 for storing information about all user networks 3 in the wide area network. For example, it may store the address 14a, 14b of each modem 5 in the WAN and the type of meters and other devices 6 to which each modem 5 is connected. The database 24 would also store the responses from the user networks 3 before the responses are passed on, if necessary, to the relevant institutions and authorities. The data authority 4 may also comprise a controller 25 for controlling the transceiver 22, the memory 23 and the database 24. Additionally, the controller 25 provides the wide area network controller for the wide area network. The network controller controls the communication between the satellite 2 and the user networks 3, instructs the satellite to send messages to the user networks and records the responses received. The data authority also comprises one or more external interfaces 26 for communicating with institutions and authorities interested in sending data to and receiving data from the user networks 3. The one or more external interfaces 26 may be secure external interfaces. As an example, an external secure interface 26 may comprise a firewall for allowing data to be securely communicated. The data authority 4 may be provided as a distributed data processing and storage system or as a dedicated server.

With reference to Figure 6, the communication satellite 2 comprises an antenna dish 27 and a transceiver 28. The communication satellite also comprises a memory 29 for storing data and instructions. Additionally, the communication satellite may comprise a database 30 for storing information about the modems in the network. The information stored in the database 30 may replicate the information stored in the database 24 of the data authority 4 or it may be different to the information stored in the database 24 of the data authority. The database 30 of the communication satellite 2 may be in addition to or instead of the database in the data authority 4. The communication satellite 2 may also comprise a controller 31 for controlling the transceiver 28, the memory 29 and the database 30.

It should be understood that Figures 3, 4, 5 and 6 are just schematic diagrams and the modem 5, the devices 6, the data authority 4 and the communication satellite 2 may comprise additional or fever components than those described. For example, additional components may be added to fulfil requirements for fault tolerance. It should further be understood that the transceiver and receiver circuitry 10, 16, 22, 28 may comprise amplifiers, filters and signal processors, not shown in the drawings. Moreover, the controllers 12, 18, 25 and 31 may be implemented using a single central processing unit or as a distributed processing system. The controllers may be implemented as software or hardware or a combination of both. Computer program code may be stored in the memories 11, 17, 23, 29 and executed by the controllers 12, 18, 25, 31. Additionally, in some embodiments, a separate database 30 is not required in the communication satellite 2.

According to the invention, the communication between the user network 3 and the communication satellite 2 is designed to allow wide geographic coverage with low data rates. By using low data rates, the satellite signal can be a low power signal. The satellite can communicate with more than 50 million separate modems on a single wireless communication link over a given geographical area. To this end, all the modems 5 remain continuously logically connected to the communication satellite 2 but each modem only transmits infrequent millisecond bursts of data with an average data transmission rate of less than 1 bit per second. The single wireless communication link can be considered as a single radio frequency cell.

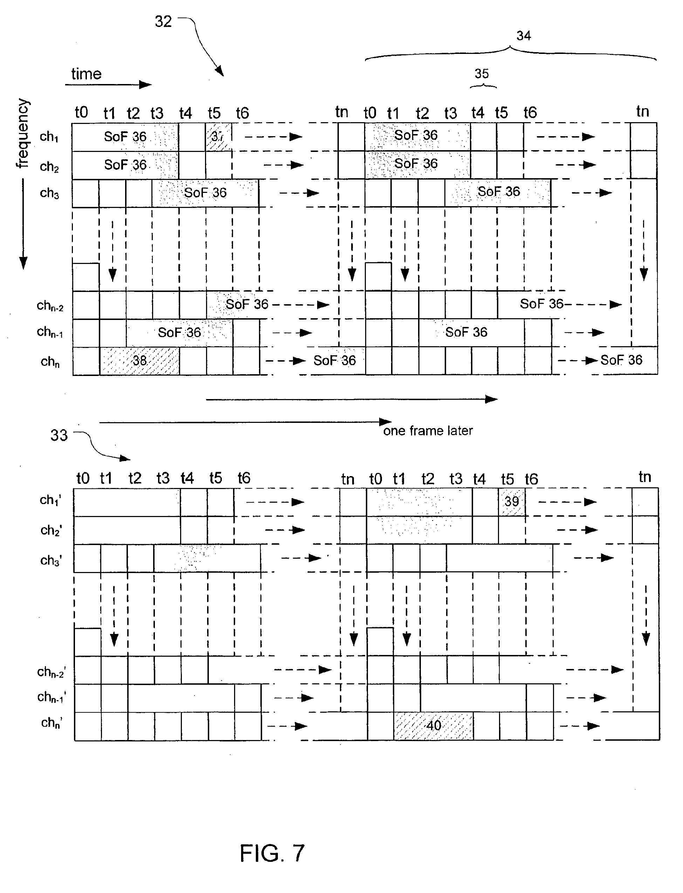

To accommodate all the user networks and to ensure flexibility in the communication if required, all modems are programmed to operate in a number of different modes. Some modems may be configured to operate in modes in which other modems cannot operate. The basic mode of operation according to the invention is shown in Figure 7.

With reference to Figure 7, the wide area network deploys a plurality of forward channels 32 and a plurality of return channels 33. The forward channels and the return channels are provided in different frequency bands. The channels may be frequency channels. Alternatively or additionally, if the wide area network deploys code-division multiplexing, the channels may correspond to different codes.

Figure 7 shows n forward channels 32 and n' return channels 33. Each channel is divided into frames 34 comprising a plurality of time slots 35. In some embodiments, the frame length is not fixed. Instead, the number of time slots per frame can be varied as will be described in more detail below. In Figure 7, the numbering of the time slots, t₁ to tₙ, is shown with respect to the frames of the first and the second channels in the forward and return channels 32, 33. This numbering will also be used to refer to the time slots in the other channels. A number of modems are allocated to each channel. In some embodiments, a modem only listens to the channel to which it is currently allocated.

In the forward channels 32, each frame starts with a broadcast message burst 36 from the communication satellite 2. The broadcast message burst 36 indicates the start of a frame and will hereinafter be referred to as a start of frame (SoF) message. As shown in Figure 7, the frames and the SoF messages do not have to be aligned between the different channels. In Figure 7, the SoF message covers four time slots 35 but this is just an example and the SoF message can be shorter or longer than four time slots. Since spectrum resources are limited, only a limited number of modems can be active at any one time. All the modems allocated to a specific channel listen to the forward communication traffic on that channel. Once synchronised with the frame structure they remain in a low power standby or sleep state and wake up to listen to the next SoF message 36 in the allocated channel. The SoF message 36 addresses a group of modems or a sub-group of modems using the group and sub-group addresses 14a of those modems and specifies the time to the next SoF message. The modems in the particular target group then prepare to receive their individual commands while the other modems go into sleep mode and wait for the next SoF message 36. Since most modems would only be addressed in a small proportion of the frames, most modems would be in low-power or sleep mode most of the time and would only wake up to listen to the SoF messages 36. Moreover, since a large number modems are in sleep mode at any one time, power consumption is reduced.

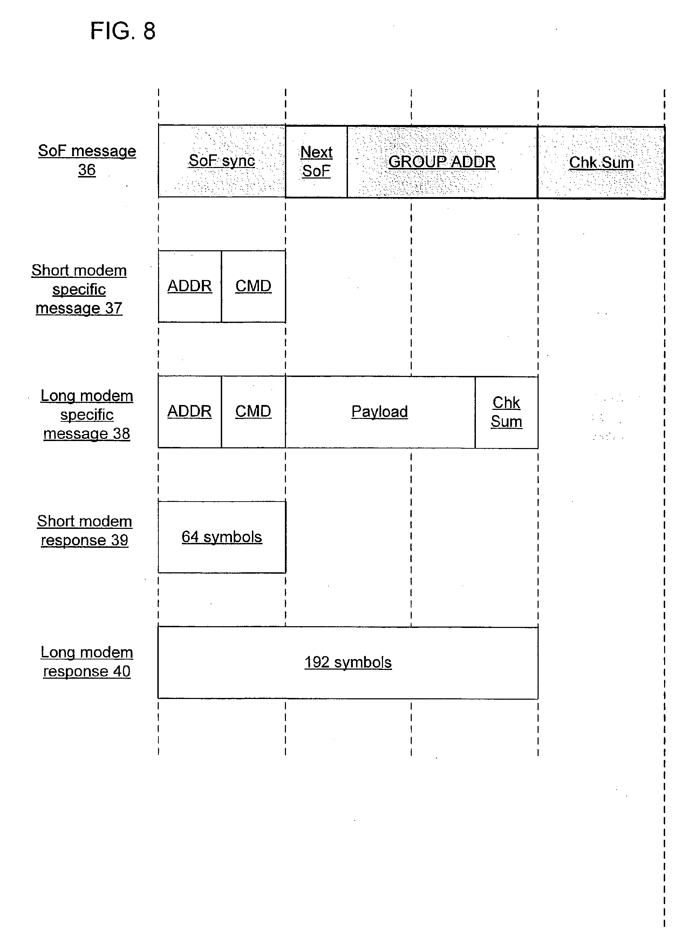

In the basic mode of operation, after the SoF message 36 the satellite 2 commences to transmit modem specific messages 37 and 38 to the modems 5 in the target group/sub-group. The beginning of a modem specific message 37, 38 is coincident with the beginning of an integer number of time slots 35. The modems addressed in the SoF message 36 listen for messages addressed to them and note the time slot in which the messages were transmitted. The message includes the address 14b of the modem in the group/sub-group and a command. The command may be communicated as a short code or as a longer set of instructions as will be shown in more detail with respect to Figure 8. All modems addressed in the SoF message listen to the modem specific messages that follow the SoF message but a specific modem only notes the time slot of a message if the message comprises the address 14b of that modem. In one example, the message may be transmitted in a single time slot 35 and may comprise an instruction to a specific modem to submit meter readings. However, other types of instructions and longer messages are also possible as will be described in more detail below.

As a result of the specific communication structure and the use of group, sub-group and specific modem addresses 14a, 14b, the network can efficiently address any specific meter at any time. If the network controller needs to send an urgent message to a specific modem, it only has to wait until the next frame. The specific messaging structure also allows many of the modems to be in sleep mode a large proportion of the time, resulting in power savings. Additionally, data overheads are reduced in the modem specific messages by using the group address 14a in the SoF message 36 and only the short specific address 14b of the modem in the group in the modem specific message 37, 38. Since a smaller amount of data needs to be transmitted in each modem specific message, the satellite can communicate with each modem more frequently.

The modem notes the instructions and the time slot in which the message 37 and 38 was transmitted and, if a response is required, transmits its response 38, 40 in the return channel 33 corresponding to the forward channel 32 in which the message was received. In some embodiments, the modem transmits the response to a message exactly one frame after the message was transmitted. In Figure 7, arrows indicating the time between the modem specific messages 37, 38 and the responses 38, 40 show that the time between a modem specific message and the corresponding response is equal the duration of the frame in which the message was transmitted. Since each modem that receives a modem specific message has been informed in the SoF message 36 that preceded the modem specific message when the next SoF message will be transmitted, it can determine the length of the frame in which the modem specific message was transmitted and also when to transmit a response. Since all modems in the target group have listened to all the messages for that group and the responses are transmitted one frame later, the timing structure for the return channel frame precisely matches that of the preceding forward channel frame. This avoids problems associated with the transmit start-up timing that would occur if the timings were close together in a particular frame. Also, it means that the modem does not receive and transmit messages at the same time. This avoids the need for a diplexer and associated loss of signal strength in the connection to the modem antenna. Additionally, it has the advantage that the information transmitted in the modem specific messages 37 and 38 can be further reduced because the message does not have to include data indicating the time slot in which the modem is permitted to transmit a response. Instead, the modem is programmed to transmit the response exactly one frame 34 after the first time slot in which the modem specific message was received. Moreover, the network controller knows from which modem a response was transmitted by determining the time slot in which the response was transmitted. However, it should be realised that other timing arrangements may be used.

A number of different types of modem specific messages and modem responses will now be described. In some embodiments, the modem specific messages may be short modem specific messages 37 or long modem specific messages 38. Similarly, the modem may respond with either a short response 39 or a long response 40. Typically, the modem responds with a short response 39 to a short message 37 and a long response 40 to a long message 38. However, it should be realised that in other embodiments, only one or some of these types of messages and responses may be used. Moreover, other types of messages, not specifically described herein may also be used.

As shown in Figure 7, the satellite 2 transmits a short modem specific message 37 to a particular modem in time slot t5 of the first frame in channel ch₁. This modem subsequently transmits a short response 39 to the satellite exactly one frame 34 later in frequency channel ch₁'. The short modem specific messages 37 and the short response 39 can each fit into a single time slot and are sufficient for the most common and simplest instructions and responses, such as requests and responses to requests for meter readings or instructions to turn on or switch off a device or a circuit supplied by the device. Short modem specific messages 37 comprise instructions in the form of a code. The modem 5 looks up the instructions corresponding to the code in memory 11. Consequently, for the most common instructions, the length of the instructions can be reduced to a code and can fit into a single time slot.

As further shown in Figure 7, a particular modem receives a long modem specific message 38 over three time slots starting at time t₁, in the first frame in frequency channel Chₙ. The modem subsequently responds to the message exactly one frame later in message 40, starting at time t₁ in frequency channel chₙ'. In some embodiments, the length of the response 40 is equal to the length of the long modem specific message 38. Long modem specific messages and responses are used for more complicated and less common instructions. Long modem specific messages may for example comprise instructions to adjust the temperature of a room, switch on or off a device which is not a very common type of device or a request for details about a fault reported by the modem. Long modem specific messages 38 may also be used to upgrade the short message command set used by a modem or to instruct the modem to change channels. The modem response 40 may comprise information requested in the long message 38 or confirmation that the instructions have been carried out.

With reference to Figure 8, the structure and length of the different fields in the SoF messages 36, the modem specific messages 37, 38 and the response 39, 40 are shown. Each time slot corresponds to a fixed number of bits. Asymmetric data rates may be used for the forward channels 32 and the return channels 33 and a time slot 35 in the forward channels 32 may be able to communicate a different number of bits to a time slot 35 in the return channel 33. A reason for this is that whereas the output power of the communication satellite 2 may be limited by the power capabilities of existing satellites used for implementing the system, the power output of the modems 5 is only limited by the available power transistors used to manufacture the modems. The data rate in the return channels 33 is typically higher than the data rate in the forward channels 32. However, the data rate in the return channels may also be lower. As an example, the data rate in the return channels may be four times the data rate in the forward channels. The modem 5 may, for example, be able to receive 16 bits (2 bytes) in a time slot 35 in the forward channels and transmit 64 bits (8 bytes) in a corresponding time slot in the return channels. For purposes of illustration, this example will be used to describe the structure of the modem messages and response below. However, it should be realised that the data rate can be increased or decreased or the duration of a time slot can be changed so that a higher or lower number of bits can be communicated in a single time slot. Moreover, it should be realised that the structure of the SoF messages 36 and the modem specific messages 36, 38 and responses 39, 40 can be different.

As shown in Figure 8, the SoF message 36 comprises a synchronisation field for allowing terminals to synchronise with the satellite. The length and structure of the synchronisation field will be determined by the requirements of the modem receive circuits. For most modems, 2 bytes is sufficient as shown in Figure 8. The first two bytes may be followed by 8 bits for the next frame field, indicating when the next frame will start. The SoF message 36 also includes a group address field which includes the address 14a of the group and possibly also a sub-group for which a frame is intended. To allow the satellite to address a very large number of modems, 24 bits may be allocated to this field. Consequently, the modems may be grouped into more than 16 million groups. It is contemplated that each terminal may belong to more than one group. The first portion of the group address field may indicate the main group and the last portion of the field may indicate a sub-group. The last 2 bytes of the SoF message may be used for a checksum to check the integrity of the SoF message 36. The number of bytes used for the checksum depends on the acceptable error rate. For non-life threatening applications 2 bytes is normally sufficient. By changing the value in the next frame field, the time until the next SoF message can be varied. As a result, the timing of the SoF messages in a particular channel can be changed and the SoF messages in different channels may not be aligned.

As further shown in Figure 8, if the modems are allocated in groups of 256 modems, a short modem specific message 37 needs 1 byte of address information for addressing the 256 modems. The modem specific message may further comprise 1 byte for indicating a short command. The command is communicated using a code to minimise the amount of data that has to be sent. The modem 5 would look up the code and realise that it is request for a meter reading from one of the connected devices 6. For example, the message may be a request for a reading from the electricity meter. Other examples include requests for interrogating other devices, such as "status", "credit", "peak reading" and "average reading" requests. Additionally, the message may be instructions to a modem to confirm its address. A short message can be sent to all modems in the group by setting the address field to a particular value, for example, zero.

As further shown in Figure 8, a long modem specific message 38 may comprise 1 byte of address information for the particular modem in the group for which the message is intended. It may also comprise a command field. Accordingly, up to and including the command field, the structure of the long modem specific message 38 is the same as the structure of the short modem specific message 37. The command field is long enough to specify 256 different codes. In some embodiments, one or a few of these codes may indicate that a long set of instructions will follow and thereby inform the modem that the command is part of a long modem specific message 38. The rest of the codes may correspond to stored instructions for short modem specific messages. The command field in the long modem specific message is followed by the payload, comprising the instructions, and a check sum. The long message is shown in Figure 8 to take up 3 slots. However, it should be realised that the long modem specific message may take up fewer or additional time slots. For some instructions, the long modem specific messages may take up a very large number of time slots. The duration of the long modem specific message 38 is only limited by the frame length. The long modem specific message 38 cannot be longer than the frame in which it is transmitted. A long modem specific message 38 can be sent to all modems in the group by setting the address field to a predetermined value, for example, zero.

Referring to Figure 8 again, a short response 39 is the length of one time slot 35. In the example described above, wherein there are sixteen bits per time slot, the short response can therefore comprise 64 bits. Since the response is sent exactly one frame after the short modem specific message 37, the network controller knows which modem sent the response and none of the bits have to be used to identify the modem. Therefore, in theory, all the available bits can be used to transmit data from the modem 6. In reality, guard intervals between the responses may be used and slightly fewer than 64 bits are available for information from the modem. However, this is more than sufficient to transmit a meter reading. In fact, it may be sufficient to transmit more than one reading. A typical electromechanical household electricity meter can record 1,000000 kWh over its life. This corresponds to 20 bits in the message field. Consequently, even if 8 bits are used for guard bits, the remaining 56 bits are more than enough to transmit two meter readings or one reading and other information. Moreover, in practice it is likely that only the change since the previous reading would be transmitted. Consequently, a short response may be sufficient to transmit two or more meter readings.

Referring to Figure 8 yet again, the duration of a long response 40 is equal to the duration of the long modem specific message 38 to which the long response is a reply. Consequently, using the example of Figure 7 and Figure 8, if the long modem specific message 38 is three time slots long, the long response is also three time slots long. Moreover, using the example of 64 bits per time slot, the long response may comprise 192 bits as shown in Figure 8. Again, some of the bits may be used in guard intervals between messages and slightly less than 192 bits may be available for the reply from the modem. A long response 40 may be required if there is a fault with one of the meters and the long modem specific message has requested the modem to transmit details of the fault.

In some embodiments, the average data rate in each forward channel is lower than 1kbits/s and the average data rate in each return channel is lower than 4kbits/s. As a specific example, a typical existing satellite may transmit 250kbps over a bandwidth of 1 MHz. If the bandwidth is divided into 1024 frequency channel, the data rate on each channel is just under 250 bits/s. With the required 16 bits per slot, there are just over 15 slots per second. To achieve a data rate that is four times higher in the return channels, the modems would have to be configured to transmit at a data rate of approximately 1 kbits/s per channel. This can be achieved, for example, by using power components that are able to transmit 1000kbps over a bandwidth of 1 MHz, divided into 1024 channels. It should be realised that these figures are only given as an example. The bandwidth may be divided into a larger or smaller number of channels. Moreover, if the power components for the modems have a lower power or higher power, the bandwidth used for the return channels may be varied to achieve the required relative data rate. For example, the bandwidth of each return channel may have to be increased to support a data rate of 1kbits/s per channel. The numbers of modems supported by each channel may have to be changed accordingly.

Additionally, it should be realised that the bandwidth used for both the forward channel and the return channel can be more or less than 1 MHz. If a wider spectrum is available, the bandwidth of both or either of the forward and the return channel can be increased.

Using the simplest mode of operation wherein each modem in a group of 256 modems is addressed with a modem specific short message in a particular frame and using the example in which the SoF message takes up 4 slots, 260 slots are required to address all the modems in a group. Furthermore, using the example above of a data rate of 250bits/s for the forward channels and 1000bits/s for the return channels, a frame would consequently be just over 17 seconds. Any modem in the network can therefore be addressed within 17 seconds. However, it should be realised that the duration of a frame varies with the data rates used for the forward and return channels. Moreover, if 256 modems are addressed every 17 seconds in a specific channel, that channel can address more than 50 000 modems in an hour. Considering that there are more than 1000 frequency channels, the system can therefore address every modem in a network of 50 million user networks in less than an hour. If every modem transmits a short response of 64 bits every hour, a modem has a transmit data rate of less than 0.02 bits per second. This can be considered as an Extremely Low Data Rate message which is orders of magnitude slower than can be accommodated by current commercial systems. In a system designed to control the supply of utilities to households, updates for a particular meter would only be required on a daily basis. Consequently, the system would also allow for other functions to be included.

In a more typical example, a frame would normally comprise slightly more than one slot per message to allow for a small number of long modem specific messages and long responses. It is therefore contemplated that a typical frame would last approximately 20s. Moreover, if many of the modems in the group require longer messages it is possible that not all messages in the group are addressed in the frame. The next frame field in the SoF message may also be used to adjust the number of slots in each frame.

If long modem specific messages 38 are required for a large number of modems allocated to a particular channel, the update rate for the other modems on that channel will be lower than the average rate. In some circumstances, the network controller may store a lower limit for the update rate for the modems on a particular channel. For example, the lower limit may correspond to the minimum update rate of meter readings required by a grid authority or a particular supplier. If the network controller determines that there is a high risk of the update rate for one or more modems falling below the lower limit in one channel, it may move one or more modems on that channel to a new channel. The new channel may have a different lower limit or no limit at all. The network controller may determine that there is a high risk of the update rate for one or more of the modems falling below the lower limit on a particular channel by analysing the messages waiting to be transmitted to the modems allocated to that channel. A modem 5 can be moved to a new channel by sending the modem a long modem specific message 38 with instructions to switch channels as mentioned above. It was further mentioned above that more than one value in the command field of the short and long modem specific messages may be used to indicate that the modem specific message is a long modem specific message. In some embodiments, one of these values may correspond to a code indicating to the modem that it should change channel. The modem then knows that the details of the new channel are provided in the payload field. If there are approximately 1000 different channels, 10 bits would be enough to specify the number of the new channel. Consequently, using the example of 16 bits per time slot, only two time slots, or 32 bits, would, in some embodiments, be required to send a long modem specific message with instructions for a modem to switch to a particular channel. After the modem has switched to the new channel, it remains on until it picks up the next SoF message in the new channel. If the modem needs to transmit a message it transmits a message in the return channel corresponding to the forward channel to which it was instructed to switch. In some embodiments, the long modem specific message instructing the modem to switch channels indicates the details of both the new forward channel and the new return channel. In other embodiments, the long modem specific message only indicates the new forward channel and the modem determines the corresponding return channel or it only indicates the new return channel and the modem determines the corresponding forward channel. A forward channel and the corresponding return channels may have corresponding addresses. If the channels are frequency channels, the modem can switch channels by tuning in to a new frequency channel. A message with instructions to switch channels can be sent to all modems in the group by setting the address field to a predetermined value, for example, zero. By instructing one or more modems to switch channels when there is too much traffic on a channel, the network controller provided by the controller 25 of the data authority 4 can ensure that the system operates property and that the system does not crash.

It should be realised that the structures of the messages described in Figure 8 is only an example. For example, each group can comprise more than 256 modems, requiring an address field of more than 1 byte. In the extreme case, all modems in a particular channel may be addressed/allowed to respond at least once in each frame. This means that in a network of 50 million modems, where each channel supports 50,000 modems, each frame would include approximately 50,000 slots. Using the example described above with 15 slots per second, a frame may be up to an hour long. However, with such long frame lengths, the network may not react quickly enough to events in the system. In some embodiments, a very long frame may be used, but all modems are still required to wake up and listen to messages bursts from the satellite at predetermined intervals in case a new mode of operation is required.

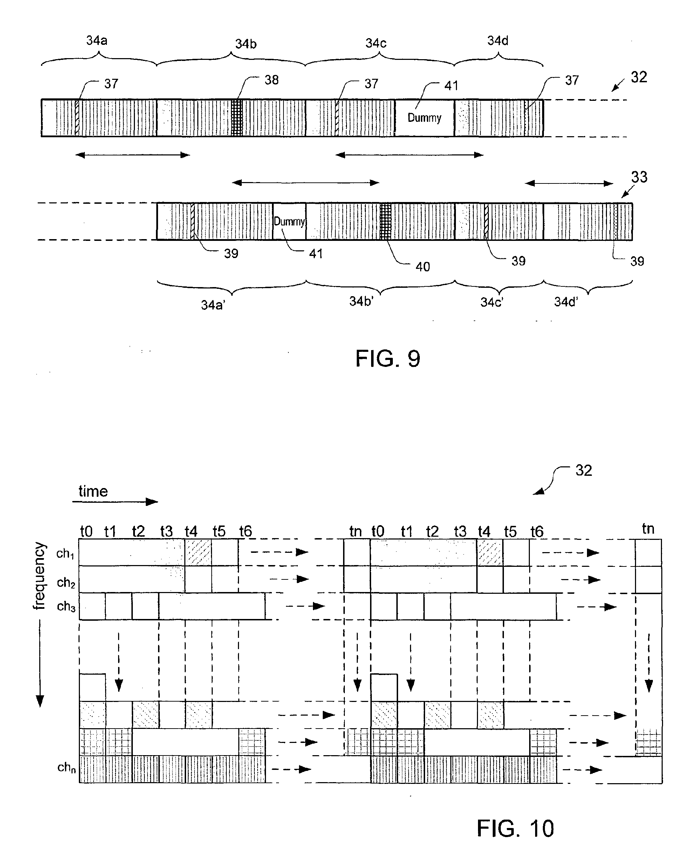

For clarity's sake, consecutive frames in each channel are shown to be of equal length in Figure 7. However, it is of course possible, as shown in Figure 9, that consecutive frames are of different length. Frames in different channels may also be of different lengths. The length of a frame is determined in dependence on a number of factors, including but not limited to, the number of modems in the group, the type of messages to be transmitted in that group and the length of those messages and is indicated by the value of the Next SoF field in the SoF message 36,. As will be described in more detail with respect to Figure 9, dummy messages may have to be inserted into the frame structure to adjust the timing of messages in the forward and return channels. Figure 9 shows one forward channel 32 comprising 4 full frames, 34a to 34d, and one return channel also comprising 4 full frames, 34a' to 34d'. Each return frame mirrors the previous forward frame. The first full frame 34a' in the return channel is of equal length to the first full frame 34a of the forward channel but starts when the frame in the forward channel finishes. A short modem specific message 37 is sent in the first full frame 34a in the forward channel and a response 39 is sent exactly one frame later in the first full frame 34a' of the return channel. By allowing the start of a return frame to coincide with the end of the corresponding forward frame, the SoF message 36 in the next forward frame will always be aligned with empty slots in the return frame. As a result, the modems will not need to receive and transmit at the same time. The importance of this will be illustrated in more detail with respect to the second forward and return frames 34b, 34b' of Figure 9.

The second frame 34b of the forward channel is longer than the first frame 34a of the forward channel and therefore also longer than the first frame 34a' of the return channel. Consequently, as shown in Figure 9, the second frame in the return channel will end, if it is not modified, before the end of the first frame in the return channel. To maintain alignment between frames in the forward channel and the return channel, a dummy message 41 is inserted at the end of the first frame 34a' of the return channel such that the first frame 34a' of the return channel ends at the same time as the second frame 34b of the forward channel. As shown in Figure 9, the second frame 34b' of the return channel then start when the second frame 34b in the forward channel ends. In the second frame of the forward channel 34b a long modem specific message 38 is sent to a modem and a response 40 is transmitted exactly one frame later in the second frame 34b' of the return channels. Without the dummy message, the timing of the response may not have been exactly one frame after the long modem specific message.

The second frame in the return frame is followed by a shorter third frame 34c. Consequently, the third frame in the forward channel would finish, if not adjusted, before the second frame in the return channel. To maintain alignment of the SoF messages and the corresponding empty slots in the return channel, a dummy message 41 is now inserted in the frame 34c in the forward channel. A response to the short modem specific message 37 in the third forward frame 34c can therefore be transmitted exactly one frame later in the third return 34c' frame. The fourth forward frame 34d has the same length as the third forward frame. Consequently, no dummy message 41 is required, either in the forward channel or in the return channel, to maintain alignment between the fourth return frame 34d' and the frame following the fourth forward frame 34d.

It should be realised that the network controller can control the number and duration of dummy messages 41 by shuffling groups and adjusting the group size. There are no corresponding time slots in the return channels for the time slots of the dummy message in the forward channels. Similarly, there are no corresponding time slots in the forward channels for the time slots of the dummy periods of the return channels. The dummy messages in the forward frame can be used for forward only traffic, i.e. messages applicable to all modems in the group that require no response. The dummy messages in the return frame can be used for modems to initiate communication with the communication satellite. For example, a modem 5 may want to send a message to a satellite that is not a direct response to a modem specific message 37, 38. The modems will know the length of the preceding frame and the length of the current frame and will therefore know the duration of the dummy period. Furthermore, abnormal traffic within this dummy period may indicate that a modem is faulty. The network controller may identify faulty modems by analysing the traffic in the dummy period.

By aligning the frames in the forward and the return channel, the modems do not have to receive and transmit at the same time. For this purpose, the network controller can also ensure that a group of modems is not addressed in consecutive frames, as illustrated in Figure 9. If the SoF message in the second forward frame were sent to a group which includes the modem that received the short modem specific message 37 in the first forward frame, that modem would have to transmit a response to the short modem specific message while listening to the modem specific messages in the second forward frame. By addressing different groups in consecutive frames, the modems do not have to receive and transmit at the same time. However, it should be realised that in embodiments where modems are manufactured to receive and transmit at the same time, a different alignment between frames can be used. Also, in that case, a modem may be addressed in every frame.

Another mode of operation will now be described with respect to Figure 10. It is contemplated that some modems need a higher update rate than other modems. For example, some modems may serve a whole block of flats and need to send meter readings more frequently than other modems. The modems are therefore divided into different classes depending on the update rates required. Different channels may be used for different classes of modems. The majority of modems belong to the basic class that only transmit a single burst of data in a given frame. As shown in Figure 10, channel Ch₁ is used for this type of modems. Channel Chₙ₋₂ is used for two modems that transmit in alternating frames. Channel Chₙ₋₁ and Channel Chₙ show the extreme case when one modem transmits continuously. Moreover, by altering the value in the next SoF field in the SoF message 36, the modems can continue to transmit over a large number of slots over an extended period. Since all the modems that belong to a specific group of modems remain on throughout the frame in which they were addressed, this mode of operation may be implemented by the modem being sent more than one modem specific message in each frame. If responses are required, the modem submits a response to each message exactly one frame after the receipt of the message.

The time slots in the return channels corresponding to the time slots taken up by the SoF message in the forward channels are not allocated for modem responses.

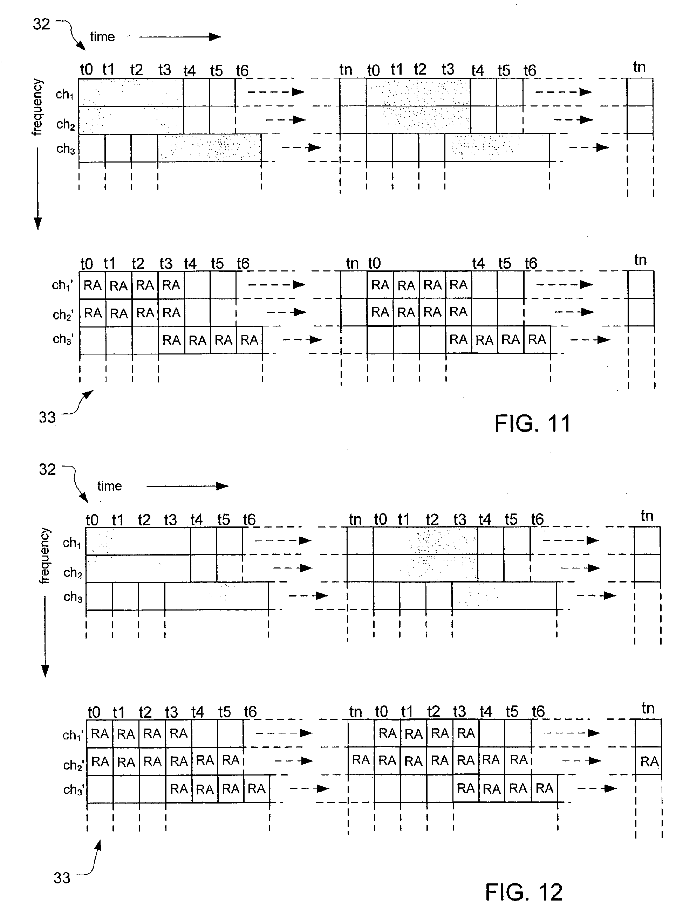

In some situations, one or more modems need to contact the network controller or the grid authorities with an urgent message or information that the network is unlikely to request using a short or a long message modem specific message. For example, a new device 6 may have been added to the user network or one or more meters communicating with the modem may need to report a fault with the utility distribution network. Alternatively, one of the "meters" may be a specialised device used to periodically monitor the safety of a vulnerable person in their home and the modem needs to urgently send information about the condition of the person. The unallocated time slots in the SoF message time slots can be used to send these messages as shown in Figure 11. In these embodiments, the modems are configured to send random access messages to the satellite 2. Each modem 5 wanting to send a message to the satellite selects a channel and a time slot, corresponding to the time slots of the SoF message 36, at random and sends a message in the selected time slot. Since the modems do not listen to the SoF messages when they transmit in the time slots corresponding to the SoF messages, they do not know when the next SoF message will be transmitted in the channel. They therefore have to stay awake until the receipt of the next SoF message. In addition, or as an alternative, to using the time slots corresponding to the SoF message, the modem may also use any time slots belonging to dummy periods 41 in the return channel 33.

If another modem attempts to send a message in the same channel and time slot, there will be a clash and the transmission will not work for either modem or it will not work for one of the modems. After the first failure, the modems would wait a random time before attempting to send another random access message. If this attempt also failed the modems would wait for increasingly longer periods until a successful communication is achieved. If too many modems attempt to generate emergency messages, the messages would continue to "clash" and no modem would receive a response from the satellite. The satellite would detect power in the time slots but it would not be able to receive and understand the messages. In that case, the satellite may switch the modems to yet another mode of operation as will be described with respect to Figure 12.

With reference to Figure 12, the network controller provided by the controller 25 of the control station 4 may decide to allocate a number of the transmit traffic channels 33 as random access channels. The normal modes of operation are disrupted on these channels. For example, the SoF message 36 may specify by using a particular value in the group address field that the next frame will be used as random access channels as shown in Figure 12. All the slots in channel ch₂' of Figure 12 are allocated for random access messages. For example, as mentioned before, the network controller may allocate the channel as a random access channel if an unusually high lever of power is detected in the SoF message slots in that channel but it cannot receive any messages. If a very large number of modems are attempting to send emergency messages to the network controller, the allocated random access channels may not be sufficient either. However, by analysing the identity of the messages that actually get through, the network controller may determine a pattern. For example, the network controller may notice that all the emergency messages are from a specific group corresponding to a particular supplier and a particular geographical area, indicating that a fault has occurred in the grid in that area. After the group has been identified, the network controller can allocate a return channel 33 to that group by specifying the group address in the SoF message in the corresponding forward channel 32 and instructing the individual modems in the group to use specific time slots to send details of the fault. In other words, the system would go back to the modes of operation described with respect to Figures 7 to 11, once the group of modems attempting to transmit emergency messages have been identified.

The system has built-in flexibility to allow the network controller to re-group the modems in case it is noticed that a set of the modems belonging to different groups need to be addressed at the same time or with similar types of messages. During operation of the network, the network may look for clusters of modems being addressed at the same time and with similar messages to determine whether a new group needs to be formed or whether some modems need to be re-grouped to an existing group. In some circumstances, the network controller may want to group the modems 5 such that modems in a cluster are spread over a plurality of groups. In other circumstances, it may want to group the modems such that all modems in a cluster belong to one or a few groups. For example, a number of modems may need to re-grouped when the households in which the modems are installed change their electricity suppliers. When a modem needs to join a new group, the existing group to which the modem belongs is addressed in an SoF message 36 and the modem is sent a modem specific message 38 with instructions to store a new group address 14a and a new modem specific address 14b within that group. The new group address may be in addition to or as a replacement for the old group address. If all the modems are not operating in the same receive and return channels, some or all of the modems may be instructed to change to a new channel.

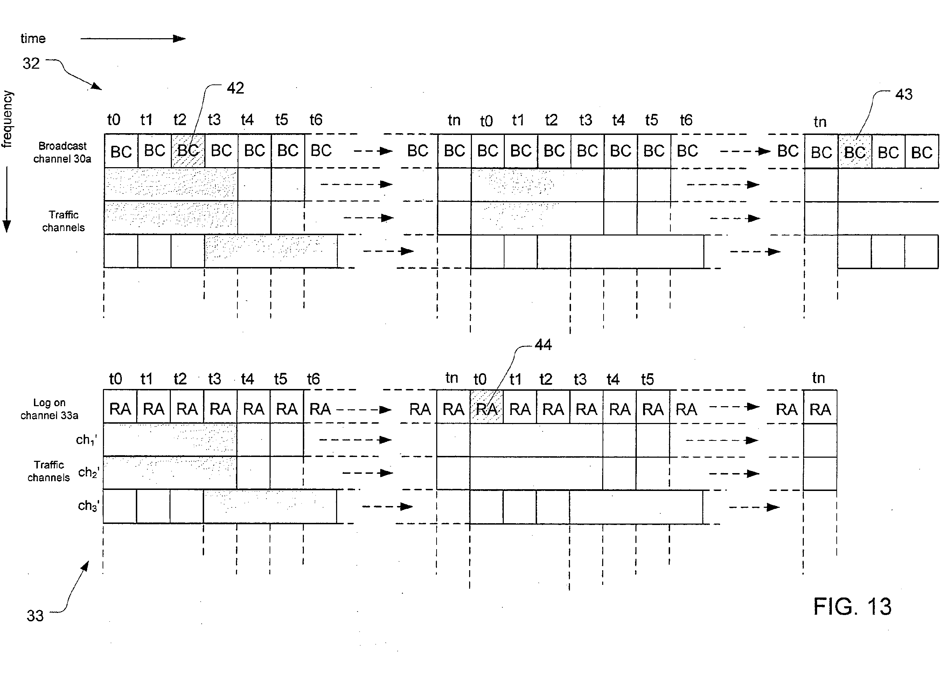

It will now be described with reference to Figure 13 how modems that wish to join the network establish initial communication with the network controller. The forward channels comprise a broadcast channel 32a and the return channels comprise a random access channel log-on channel 33a in addition to the previously described traffic channels. The channels are divided up into fixed time slots as described above. Network control messages 42 are transmitted from the satellite in the time slots on the broadcast channel. The modem has prior knowledge of which frequency is being used for the broadcast channel and "listens" for the regular control message. The control message may comprise a synchronisation field, a field indicating the start of the next frame and information about the network. The information may comprise information identifying the network and information about the frame structure of the communication. It may also comprise timing information giving details of, for example, compensation for delays on an area basis or instructions to wait for a random time before trying to send access messages if many modems are present at the same time.

Once the modem 5 has acquired the control message it then attempts to transmit a network request 43 in the random access log on channel 33a of the return channels 33. The modem 5 selects a particular access slot at random and transmits, amongst other data, its identification details. It may also transmit details of utility suppliers and its geographical area to allow the network controller to allocate it to specific groups. If this response is received successfully by the network then an acknowledgement 44 is sent in a subsequent control message frame. This acknowledgement will contain the one or more addresses 14a, 14b that have been allocated by the network to the particular modem 5. The modem stores these addresses in memory 11. The acknowledgement 44 may also comprise individual timing and power control information for the modem. Additionally, it may, allocate a specific channel to the modem. If the identification details of the modem are not recognised, the acknowledgement message may be instructions to the modem not to attempt to connect to the network again. Should the connection message clash with another connection message from another modem that is also trying to establish communication at the same time then neither modems would receive an acknowledgement. Both would then make another attempt in different slots selected at random from the log on channel. At any particular time, provided that there are more available slots than modems trying to establish communication, then the likelihood of clashes remains low.

New modems are allocated to existing channels. When all the channels are full, the system can be modified to support further modems by allocating more bandwidth. Additionally, or alternatively, the system can be modified to support further modems by reducing the update rate on some or all of the existing channels and allocating a larger number of modems to the channels.

The log-on channel can also be used by modems to send emergency messages to the satellite. As described with respect to Figure 12, if the network controller determines that many modems belonging to the same group attempts to transmit emergency messages on the log-on channel, it can instruct the group to transmit messages in one of the traffic channels in time slots allocated to the modems using mode specific messages. In some embodiments, the modems may transmit urgent messages on the log-on channel and messages with non-urgent information related to tasks that the modems would like to initiate on the SoF message time slots and the dummy message time slots in the return channel. The system can therefore ensure that there will be a sufficient number of time slots allocated to urgent messages. By allocating random access time slots and random access channels and by instructing modems 5 that try to send random access messages to send messages in specific time slots, if suitable, the network controller can ensure that the system does not jam or crash.

Whilst specific examples of the invention have been described, the scope of the invention is defined by the appended claims and not limited to the examples. The invention could therefore be implemented in other ways, as would be appreciated by those skilled in the art.

For example, a different timing structure to the one showed in Figure 8 may be used. Additionally, the satellite and the modems are not necessarily limited to sending messages and responses one frame later as described with respect to Figure 7, 8 and 9. Instead, modem specific messages may include instructions about which time a response can be sent. Alternatively, or additionally, the response may include the address of the modem to allow the satellite to determine the origin of the response. Moreover, the duration of a response from a modem does not have to be determined by the duration of the message received by that modem from a satellite. The duration of a response can be different to the duration of the initial message.

Moreover, although it has been described that the modems are allocated to specific channels, it is possible that all the modems listen to all the channels. This would make it easier to address a modem on a new channel since the modem would not have to be instructed to switch channels first. It is further possible a modem can listen on one channel or on all the channels based on the mode of operation. For example, a modem may be instructed to listen on all channels for a predetermined time period or until instructed to only listen to one or a few channels again.

Furthermore, although the modem has been described as a separate terminal to the other devices 6 in the user network 3, the modem could be combined with one of the other devices 6.

Moreover, although it has been described as advantageous for the modems not to receive and transmit data at the same time, the modems can of course be configured to receive and transmit data at the same time in some embodiments.

Additionally, it should be understood that further modes of operations than the ones described herein can be used. A modem can be upgraded to use a new mode of operation. For example, a modem can be instructed to switch to another channel and on that channel receive one or more long messages for upgrading the modem to operate in a new mode of operation. If a modem is instructed to operate according to a mode of operation in which it is not configured to operate, it may go into sleep mode and wake up at the beginning of the next frame in that channel.

## Claims

1. terminal comprising:
a first transceiver for communicating with a geostationary communication satellite in a network deploying a plurality of forward channels for the communication satellite to transmit data to said terminal and a plurality of return channels for the terminal to transmit data to said geostationary communication satellite, the forward and return channels comprising a plurality of frames divided into time slots in a predetermined frame structure;
storage means for storing one or more addresses of said terminal, the one or more addresses comprising a group address indicating a group of terminals to which the terminal belongs and terminal specific address within the group; and
control means for controlling a second transceiver to receive, at a predetermined time, a group message in a forward channel of said plurality of forward channels from said communication satellite, the group message being transmitted according to the predetennined frame structure and indicating a group address, the control means further being configured to determine whether the group address matches a stored address for the terminal and in response to a determination that the group address matches a stored group address, to control the transceiver to listen for a terminal specific message to said terminal in the frame in which said message was transmitted.

2. A terminal according to claim 1, wherein the transceiver is configured to be continuously logically connected to said geostationary communication satellite.

3. A terminal according to claim 1 or 2, wherein the control means are configured to switch the transceiver into sleep-mode in response to determining that the group address does not match a stored group address for the terminal wherein the terminal specific message may indicate a new group address for said terminal and the memory is configured to store the new group address.

4. A terminal according to any preceding claim, wherein the terminal specific message comprises a terminal specific address of the terminal and data indicating instructions to perform an action,
wherein the storage means may comprise a look-up table storing the code and the instructions corresponding to the code.

5. A terminal according to claim 4, wherein said data indicating instructions to perform an action comprises instructions to switch to another forward channel of said plurality of forward channels.

6. A terminal according to any preceding claim, wherein the control means are configured to control the transceiver to send a response to said terminal specific message in a return channel of the plurality of return channels, said return channel corresponding to said forward channel and/or wherein the control means is configured to control the transceiver to send said response at a predetermined interval after the start of said terminal specific message, the predetermined interval corresponding to the duration of the frame in which the terminal specific message was received,
wherein the duration of the response may be equal to the duration of the corresponding modem specific message.

7. A terminal according to any one of the preceding claims, wherein the control means is configured to control the transceiver to transmit a random access message in a return channel of the plurality of return channels in response to the group message indicating that the return channel is a random access channel and/or wherein the group message is transmitted over a number of time slots and the control means is configured to control the transceiver to transmit a random access message in one or more time slots in a return channel corresponding to one or more of the number of time slots of a group message in a corresponding forward channel.

8. A terminal according to any one of the preceding claims, further comprising a further transceiver for communicating with at least one device in a short range network, the further transceiver for communicating with the geostationary communication satellite being configured to transmit data from said at least one device in one of said plurality of return channels and optionally wherein said at least one device is a utility meter and the terminal is operable to transmit a meter reading in said return channel and wherein the further transceiver may comprise an antenna with a gain of between odBi and 12 dBi for communicating with the communication satellite.

9. A network comprising a terminal according to claim 8 and at least one device for communicating with said terminal in said short-range network, wherein said network may be an ad-hoc short-range wireless network, and wherein said device may be at least one utility meter.

10. A system comprising
a geostationary communication satellite;
a plurality of user networks according to claim 9 for communication with the geostationary communication satellite in a wide area network; and
a network controller for controlling the wide area network, wherein the network controller may be configured to group the terminals of said plurality of user networks into a plurality of groups and wherein the system may be configured to collect utility meter readings across a geographical region.

11. A method of communicating with a geostationary communication satellite in a wide area network using a terminal in the wide area network, the network deploying a plurality of forward channels for the geostationary communication satellite to transmit data to the terminal and a plurality of return channels for the terminal to transmit data to the geostationary communication satellite, the forward and return channels comprising a plurality of frames divided into time slots, the method comprising:
receiving in the terminal a group message from the geostationary communication satellite at a predetermined time in a forward channel, the group message comprising a group address indicating a group of terminals;
comparing the group address to a stored group address; and
if the group address matches a stored group address, listening for a terminal specific message in the frame in which said group message was received.

12. A method according to claim 11, further comprising
receiving a terminal specific message, the terminal specific message comprising a terminal specific address and data indicating instructions;
comparing the terminal specific address to a stored terminal specific address; and
if the terminal specific address matches the stored terminal specific address, performing the instructions, and optionally:
noting the time slot in which the terminal specific address was transmitting and transmitting a response to said terminal in a time slot at a predetermined interval later in a return channel corresponding to said forward channel, the predetermined interval corresponding to the duration of the frame in which the terminal specific message was received.

13. A computer program comprising instructions that when executed by a processor causes the processor to perform the method of any one of claims 11 or 12.

14. A system for communicating with a plurality of terminals via a geostationary communication satellite, the plurality of terminals and the communication satellite communicating in a network deploying a plurality of forward channels for the geostationary communication satellite to transmit data to the plurality of terminals and a plurality of return channels for the terminals to transmit data to the geostationary communication satellite, the plurality of forward channels and the plurality of return channels comprising a plurality of frames divided into time slots, the system comprising:
means for transmitting a group message and a subsequent terminal specific message via a geostationary communication satellite to a terminal in one of said forward channels, said group message indicating a group address for a group of terminals of said plurality of terminals and said subsequent terminal specific message indicating a terminal specific address of a terminal belonging to said group of terminals.

15. A system according to claim 14, further comprising
means for receiving a response; and
means for determining the time slot in which the response was transmitted and, if the interval between beginning of the time slot in which the terminal specific message was transmitted and the beginning of the time slot in which the response was transmitted corresponds to the duration of the frame in which the terminal specific message was transmitted, determining that the response was transmitted from said terminal belonging to said plurality of terminals.

## Patentansprüche

1. Endgerät, das Folgendes umfasst:
einen ersten Transceiver zum Kommunizieren mit einem geostationären Kommunikationssatelliten in einem Netz, das mit mehreren Hinkanälen für den Kommunikationssatelliten zum Übertragen von Daten zu dem genannten Endgerät und mehreren Rückkanälen für das Endgerät zum Übertragen von Daten zu dem genannten geostationären Kommunikationssatelliten arbeitet, wobei die Hin- und Rückkanäle mehrere Frames umfassen, die in Zeitschlitze in einer vorbestimmten Frame-Struktur unterteilt sind;
Speichermittel zum Speichern von einer oder mehreren Adressen des genannten Endgerätes, wobei die ein oder mehreren Adressen eine Gruppenadresse beinhalten, die eine Gruppe von Endgeräten anzeigt, zu denen das Endgerät gehört, und eine endgerätspezifische Adresse innerhalb der Gruppe; und
Steuermittel zum Steuern eines zweiten Transceivers zum Empfangen, zu einer vorbestimmten Zeit, einer Gruppennachricht in einem Hinkanal der genannten mehreren Hinkanäle von dem genannten Kommunikationssatelliten, wobei die Gruppennachricht gemäß der vorbestimmten Frame-Struktur übertragen wird und eine Gruppenadresse anzeigt, wobei das Steuermittel ferner konfiguriert ist zum Ermitteln, ob die Gruppenadresse mit einer gespeicherten Adresse für das Endgerät übereinstimmt, und als Reaktion auf eine Ermittlung, dass die Gruppenadresse mit einer gespeicherten Gruppenadresse übereinstimmt, den Transceiver zum Horchen auf eine endgerätspezifische Nachricht an das genannte Endgerät in dem Frame zu steuern, in dem die genannte Nachricht übertragen wurde.

2. Endgerät nach Anspruch 1, wobei der Transceiver so konfiguriert ist, dass er mit dem genannten geostationären Kommunikationssatelliten ständig logisch verbunden ist.

3. Endgerät nach Anspruch 1 oder 2, wobei die Steuermittel zum Schalten des Transceivers in einen Ruhemodus als Reaktion auf die Ermittlung konfiguriert sind, dass die Gruppenadresse nicht mit einer gespeicherten Gruppenadresse für das Endgerät übereinstimmt, wobei die endgerätspezifische Nachricht eine neue Gruppenadresse für das genannte Endgerät anzeigen kann, und der Speicher zum Speichern der neuen Gruppenadresse konfiguriert ist.

4. Endgerät nach einem der vorherigen Ansprüche, wobei die endgerätspezifische Nachricht eine endgerätspezifische Adresse des Endgeräts sowie Daten beinhaltet, die Befehle zum Ausführen einer Aktion anzeigen,
wobei die Speichermittel eine Nachschlagtabelle beinhalten können, die den Code und die dem Code entsprechenden Befehle speichert.

5. Endgerät nach Anspruch 4, wobei die genannten, Befehle zum Ausführen einer Aktion anzeigenden Daten Befehle zum Umschalten auf einen anderen Hinkanal der genannten mehreren Hinkanäle beinhalten.

6. Endgerät nach einem der vorherigen Ansprüche, wobei die Steuermittel zum Steuern des Transceivers zum Senden einer Antwort auf die genannte endgerätspezifische Nachricht in einem Rückkanal der mehreren Rückkanäle konfiguriert sind, wobei der genannte Rückkanal dem genannten Hinkanal entspricht und/oder wobei das Steuermittel zum Steuern des Transceivers zum Senden der genannten Antwort in einem vorbestimmten Intervall nach dem Start der genannten endgerätspezifischen Nachricht konfiguriert ist, wobei das vorbestimmte Intervall der Dauer des Frame entspricht, in dem die endgerätspezifische Nachricht empfangen wurde,
wobei die Dauer der Antwort gleich der Dauer der entsprechenden modemspezifischen Nachricht sein kann.

7. Endgerät nach einem der vorherigen Ansprüche, wobei das Steuermittel zum Steuern des Transceivers zum Übertragen einer Direktzugriffsnachricht in einem Rückkanal der mehreren Rückkanäle als Reaktion darauf konfiguriert ist, dass die Gruppennachricht anzeigt, dass der Rückkanal ein Direktzugriffskanal ist, und/oder wobei die Gruppennachricht über eine Anzahl von Zeitschlitzen übertragen wird und das Steuermittel zum Steuern des Transceivers zum Übertragen einer Direktzugriffsnachricht in einem oder mehreren Zeitschlitzen in einem Rückkanal konfiguriert ist, der einem oder mehreren aus der Anzahl von Zeitschlitzen einer Gruppennachricht in einem entsprechenden Hinkanal entspricht.

8. Endgerät nach einem der vorherigen Ansprüche, das ferner einen weiteren Transceiver zum Kommunizieren mit wenigstens einem Gerät in einem Kurzstreckennetzwerk umfasst, wobei der weitere Transceiver zum Kommunizieren mit dem geostationären Kommunikationssatelliten zum Übertragen von Daten von dem genannten wenigstens einen Gerät in einem der genannten mehreren Rückkanäle konfiguriert ist, und wobei optional das genannte wenigstens eine Gerät ein Energiemessgerät ist und das Endgerät die Aufgabe hat, einen Messwert in dem genannten Rückkanal zu übertragen, und wobei der weitere Transceiver ferner eine Antenne mit einer Verstärkung zwischen 0 dBi und 12 dBi zum Kommunizieren mit dem Kommunikationssatelliten umfassen kann.

9. Netz, das ein Endgerät nach Anspruch 8 und wenigstens ein Gerät zum Kommunizieren mit dem genannten Endgerät in dem genannten Kurzstreckennetz umfasst, wobei das genannte Netz ein drahtloses Ad-hoc-Kurzstreckennetz sein kann und wobei das genannte Gerät wenigstens ein Energiemessgerät sein kann.

10. System, das Folgendes umfasst:
einen geostationären Kommunikationssatelliten;
mehrere Benutzernetze nach Anspruch 9 für die Kommunikation mit dem geostationären Kommunikationssatelliten in einem Weitbereichsnetz; und
eine Netzsteuerung zum Steuern des Weitbereichsnetzes, wobei die Netzsteuerung zum Gruppieren der Endgeräte der genannten mehreren Benutzernetze zu mehreren Gruppen konfiguriert ist, und wobei das System zum Sammeln von Energiemesswerten über eine geografische Region konfiguriert sein kann.

11. Verfahren zum Kommunizieren mit einem geostationären Kommunikationssatelliten in einem Weitbereichsnetz mit einem Endgerät in dem Weitbereichsnetz, wobei das Netz mit mehreren Hinkanälen für den geostationären Kommunikationssatelliten zum Übertragen von Daten zu dem Endgerät und mit mehreren Rückkanälen für das Endgerät zum Übertragen von Daten zu dem geostationären Kommunikationssatelliten arbeitet, wobei die Hin- und Rückkanäle mehrere in Zeitschlitze unterteilte Frames umfassen, wobei das Verfahren Folgendes beinhaltet:
Empfangen, in dem Endgerät, einer Gruppennachricht von dem geostationären Kommunikationssatelliten zu einer vorbestimmten Zeit in einem Hinkanal, wobei die Gruppennachricht eine eine Gruppe von Endgeräten anzeigende Gruppenadresse beinhaltet;
Vergleichen der Gruppenadresse mit einer gespeicherten Gruppenadresse; und
Horchen, wenn die Gruppenadresse mit einer gespeicherten Gruppenadresse übereinstimmt, auf eine endgerätspefizische Nachricht in dem Frame, in dem die genannte Gruppennachricht empfangen wurde.

12. Verfahren nach Anspruch 11, das ferner Folgendes beinhaltet:
Empfangen einer endgerätspezifischen Nachricht, wobei die endgerätspezifische Nachricht eine endgerätspezifische Adresse und Befehle anzeigende Daten beinhaltet;
Vergleichen der endgerätspezifischen Adresse mit einer gespeicherten endgerätspezifischen Adresse; und
Ausführen, wenn die endgerätspezifische Adresse mit der gespeicherten endgerätspezifischen Adresse übereinstimmt, der Befehle, und optional:
Notieren des Zeitschlitzes, in dem die endgerätspezifische Adresse gesendet hat, und Senden einer Antwort zu dem genannten Endgerät in einem Zeitschlitz in einem vorbestimmten Intervall später in einem Rückkanal, der dem genannten Hinkanal entspricht, wobei das vorbestimmte Intervall der Dauer des Frame entspricht, in dem die endgerätspezifische Nachricht empfangen wurde.

13. Computerprogramm mit Befehlen, die bei Ausführung durch einen Prozessor bewirken, dass der Prozessor das Verfahren nach Anspruch 11 oder 12 ausführt.

14. System zum Kommunizieren mit mehreren Endgeräten über einen geostationären Kommunikationssatelliten, wobei die mehreren Endgeräte und der Kommunikationssatellit in einem Netz kommunizieren, das mit mehreren Hinkanälen für den geostationären Kommunikationssatelliten zum Übertragen von Daten zu den mehreren Endgeräten und mit mehreren Rückkanälen für die Endgeräte zum Übertragen von Daten zu dem geostationären Kommunikationssatelliten arbeitet, wobei die mehreren Hinkanäle und die mehreren Rückkanäle mehrere in Zeitschlitze unterteilte Frames beinhalten, wobei das System Folgendes umfasst:
Mittel zum Übertragen einer Gruppennachricht und einer nachfolgenden endgerätspezifischen Nachricht über einen geostationären Kommunikationssatelliten zu einem Endgerät in einem der genannten Hinkanäle, wobei die genannte Gruppennachricht eine Gruppenadresse für eine Gruppe von Endgeräten der genannten mehreren Endgeräte anzeigt und die genannte nachfolgende endgerätspezifische Nachricht eine endgerätspezifische Adresse eines Endgeräts anzeigt, das zu der genannten Gruppe von Endgeräten gehört.

15. System nach Anspruch 14, das ferner Folgendes umfasst:
Mittel zum Empfangen einer Antwort; und
Mittel zum Ermitteln des Zeitschlitzes, in dem die Antwort gesendet wurde, und, wenn das Intervall zwischen dem Beginn des Zeitschlitzes, in dem die endgerätspezifische Nachricht gesendet wurde, und dem Beginn des Zeitschlitzes, in dem die Antwort gesendet wurde, der Dauer des Frame entspricht, in dem die endgerätspezifische Nachricht gesendet wurde, Feststellen, dass die Antwort von dem genannten Endgerät gesendet wurde, das zu den mehreren Endgeräten gehört.

## Revendications

1. Terminal comprenant :
un premier émetteur-récepteur pour communiquer avec un satellite de communication géostationnaire dans un réseau déployant une pluralité de canaux aller permettant au satellite de communication de transmettre des données audit terminal et une pluralité de canaux retour permettant au terminal de transmettre des données audit satellite de communication géostationnaire, les canaux aller et retour comprenant une pluralité de trames divisées en tranches de temps dans une structure de trames prédéterminée ;
un moyen de stockage pour stocker une ou plusieurs adresses dudit terminal, les une ou plusieurs adresses comprenant une adresse de groupe indiquant un groupe de terminaux auquel appartient le terminal et une adresse spécifique au terminal dans le groupe ; et
un moyen de commande pour commander un second émetteur-récepteur afin de recevoir, à un temps prédéterminé, un message de groupe dans un canal aller de ladite pluralité de canaux aller depuis ledit satellite de communication, le message de groupe étant émis en fonction de la structure de trames prédéterminée et indiquant une adresse de groupe, le moyen de commande étant en outre configuré pour déterminer que l'adresse de groupe correspond ou non à une adresse stockée du terminal et en réponse à une détermination que l'adresse de groupe correspond à une adresse de groupe stockée, commander l'émetteur-récepteur afin de rechercher un message spécifique au terminal dans la trame dans laquelle ledit message a été émis.

2. Terminal selon la revendication 1, dans lequel l'émetteur-récepteur est configuré pour être continuellement connecté logiquement audit satellite de communication géostationnaire.

3. Terminal selon la revendication 1 ou 2, dans lequel les moyens de commande sont configurés pour commuter l'émetteur-récepteur en un mode de veille en réponse à la détermination que l'adresse de groupe ne correspond pas à une adresse de groupe stockée du terminal, le message spécifique au terminal pouvant indiquer une nouvelle adresse de groupe dudit terminal et la mémoire étant configurée pour stocker la nouvelle adresse de groupe.

4. Terminal selon l'une quelconque des revendications précédentes, dans lequel le message spécifique au terminal comprend une adresse spécifique au terminal et des données indiquant des instructions pour effectuer une action,
dans lequel le moyen de stockage peut comprendre une table de consultation stockant le code et les instructions correspondant au code.

5. Terminal selon la revendication 4, dans lequel lesdites données indiquant des instructions pour exécuter une action comprennent des instructions pour commuter sur un autre canal aller de ladite pluralité de canaux aller.

6. Terminal selon l'une quelconque des revendications précédentes, dans lequel les moyens de commande sont configurés pour commander l'émetteur-récepteur afin d'envoyer une réponse audit message spécifique au terminal dans un canal retour de la pluralité de canaux retour, ledit canal retour correspondant audit canal aller et/ou dans lequel le moyen de commande est configuré pour commander l'émetteur-récepteur afin d'envoyer ladite réponse à un intervalle prédéterminé après le début dudit message spécifique au terminal, l'intervalle prédéterminé correspondant à la durée de la trame dans laquelle le message spécifique au terminal a été reçu,
dans lequel la durée de la réponse peut être égale à la durée du message spécifique au modem correspondant.

7. Terminal selon l'une quelconque des revendications précédentes, dans lequel le moyen de commande est configuré pour commander à l'émetteur-récepteur d'émettre un message d'accès aléatoire dans un canal retour de la pluralité de canaux retour en réponse au message de groupe indiquant que le canal retour est un canal d'accès aléatoire et/ou dans lequel le message de groupe est émis sur un certain nombre de tranches de temps et le moyen de commande est configuré pour commander l'émetteur-récepteur afin d'émettre un message d'accès aléatoire dans une ou plusieurs tranches de temps dans un canal de retour correspondant à une ou plusieurs du nombre de tranches de temps d'un message de groupe dans un canal aller correspondant.

8. Terminal selon l'une quelconque des revendications précédentes, comprenant en outre un autre émetteur-récepteur pour communiquer avec au moins un dispositif dans un réseau de courte portée, l'autre émetteur-récepteur pour communiquer avec le satellite de communication géostationnaire étant configuré pour transmettre des données depuis ledit au moins un dispositif dans l'un de ladite pluralité de canaux retour et optionnellement dans lequel ledit au moins un dispositif est un compteur d'énergie et le terminal est exploitable pour transmettre une lecture de compteur dans ledit canal retour et dans lequel l'autre émetteur-récepteur peut comprendre une antenne ayant un gain entre 0 dBi et 12 dBi pour communiquer avec le satellite de communication.

9. Réseau comprenant un terminal selon la revendication 8 et au moins un dispositif pour communiquer avec ledit terminal dans ledit réseau de courte portée, ledit réseau pouvant être un réseau sans fil de courte portée ad-hoc, et dans lequel ledit dispositif peut être au moins un compteur d'énergie.

10. Système comprenant
un satellite de communication géostationnaire ; une pluralité de réseaux utilisateurs selon la revendication 9 pour communiquer avec le satellite de communication géostationnaire dans un grand réseau ; et
un contrôleur de réseau pour commander le grand réseau, le contrôleur de réseau pouvant être configuré pour grouper les terminaux de ladite pluralité de réseaux utilisateurs dans une pluralité de groupes et dans lequel le système peut être configuré pour collecter des lectures de compteur d'énergie dans une région géographique.

11. Procédé de communication avec un satellite de communication géostationnaire dans un grand réseau utilisant un terminal dans le grand réseau, le réseau déployant une pluralité de canaux aller permettant au satellite de communication géostationnaire de transmettre des données au terminal et une pluralité de canaux retour permettant au terminal de transmettre des données au satellite de communication géostationnaire, les canaux aller et retour comprenant une pluralité de trames divisées en tranches de temps, le procédé comprenant :
la réception dans le terminal d'un message de groupe depuis le satellite de communication géostationnaire à un temps prédéterminé dans un canal aller, le message de groupe comprenant une adresse de groupe indiquant un groupe de terminaux ;
la comparaison de l'adresse de groupe à une adresse de groupe stockée ; et
si l'adresse de groupe correspond à une adresse de groupe stockée, la recherche d'un message spécifique au terminal dans la trame dans laquelle ledit message de groupe a été reçu.

12. Procédé selon la revendication 11, comprenant en outre
la réception d'un message spécifique au terminal, le message spécifique au terminal comprenant une adresse spécifique au terminal et des données indiquant des instructions ;
la comparaison de l'adresse spécifique au terminal à une adresse spécifique au terminal stockée ; et
si l'adresse spécifique au terminal correspond à l'adresse spécifique au terminal stockée, l'exécution des instructions, et optionnellement :
la consignation de la tranche de temps dans laquelle l'adresse spécifique au terminal a été émise et l'émission d'une réponse audit terminal dans une tranche de temps à un intervalle prédéterminé ultérieur dans un canal retour correspondant audit canal aller, l'intervalle prédéterminé correspondant à la durée de la trame dans laquelle le message spécifique au terminal a été reçu.

13. Programme informatique comprenant des instructions qui, lorsqu'elles sont exécutées par un processeur amène le processeur à exécuter le procédé selon l'une quelconque des revendications 11 ou 12.

14. Système de communication avec une pluralité de terminaux par l'intermédiaire d'un satellite de communication géostationnaire, la pluralité de terminaux et le satellite de communication communiquant dans un réseau déployant une pluralité de canaux aller permettant au satellite de communication géostationnaire de transmettre des données à ladite pluralité de terminaux et une pluralité de canaux retour permettant aux terminaux de transmettre des données audit satellite de communication géostationnaire, la pluralité de canaux aller et la pluralité de canaux retour comprenant une pluralité de trames divisées en tranches de temps, le système comprenant :
un moyen pour émettre un message de groupe et un message spécifique au terminal ultérieur par l'intermédiaire d'un satellite de communication géostationnaire à un terminal dans l'un desdits canaux aller, ledit message de groupe indiquant une adresse de groupe pour un groupe de terminaux de ladite pluralité de terminaux et ledit message spécifique au terminal ultérieur indiquant une adresse spécifique au terminal d'un terminal appartenant audit groupe de terminaux.

15. Système selon la revendication 14, comprenant en outre
un moyen de réception d'une réponse ; et
un moyen de détermination de la tranche de temps dans laquelle la réponse a été émise, et si l'intervalle entre le début de la tranche de temps dans laquelle le message spécifique au terminal a été émis et le début de la tranche de temps dans laquelle la réponse a été émise correspond à la durée de la trame dans laquelle le message spécifique au terminal a été émis, la détermination que la réponse a été émise depuis ledit terminal appartenant à ladite pluralité de terminaux.
